# EUROPÄISCHE PATENTSCHRIFT

(11) **EP 1 684 577 B1**
(45) Veröffentlichungstag und Bekanntmachung des Hinweises auf die Patenterteilung: **23.04.2008**
(21) Anmeldenummer: 04797403.5
(22) Anmeldetag: 02.11.2004
(51) Int. Cl.: A01K 89/015

(54) **ROLLENEINHEIT ZUR VERWENDUNG BEI EINER ANGEL UND HALTER FÜR EINE ROLLENEINHEIT**
REEL UNIT FOR USE IN A FISHING ROD AND HOLDER FOR SUCH A REEL UNIT
MOULINET POUR CANNE A PECHE ET SUPPORT DE MOULINET

(30) Priorität: 05.11.2003 DE 10352161; 10.12.2003 DE 10358084; 10.12.2003 DE 10358083
(43) Veröffentlichungstag der Anmeldung: 02.08.2006
(73) Patentinhaber: Klein, Helmut, 94526 Metten (DE)
(72) Erfinder: Klein, Helmut, 94526 Metten (DE)
(74) Vertreter: Glück, Martin
(86) Internationale Anmeldenummer: PCT/DE2004/002429
(87) Internationale Veröffentlichungsnummer: WO 2005/043996

(56) Entgegenhaltungen:
- US-A- 1 398 197
- US-A- 2 623 704
- US-A- 3 072 356
- US-A- 4 223 854
- US-A- 4 747 560
- US-A- 5 482 220
- US-A- 5 947 399

## Beschreibung

Die Erfindung bezieht sich auf eine Rolleneinheit (Multi-Rolle) gemäß Oberbegriff Patentanspruch 1 oder 13 und auf einen Halter für eine Rolleneinheit gemäß Oberbegriff Patentanspruch 17.

Rolleneinheiten zum Auf- und Abwickeln der Angelschnur sind in verschiedenen Ausführungen bekannt. Bekannt sind insbesondere auch Rolleneinheiten, bei denen die Spule um eine Achse drehbar an der Angelrute oder -gerte vorgesehen ist, die (Achse) senkrecht zu einer die Längsachse der Gerte einschließenden Ebene orientiert ist. Das manuelle Drehen der Spule erfolgt über eine seitlich an einem Gehäuse vorgesehene Kurbel, die über ein Getriebe antriebsmäßig mit der Spule verbunden ist. Das Getriebe ist mit einer Rücklaufsperre versehen, die manuell entriegelbar ist und im nicht entriegelten Zustand ein Drehen der Spule im Sinne eines Einholens der Angelschnur ermöglicht, ein Drehen der Spule in entgegengesetzter Richtung aber sperrt. Sofern eine Schnurführung vorhanden ist, weist diese nach vorne.

Üblicherweise wird die Rolleneinheit auf der Gerte stehend, also oberhalb der Gerte montiert. Die Kurbel für den manuellen Antrieb der Spule befindet sich dabei auf der rechten Seite des Gehäuses. Diese Ausbildung wurde ursprünglich aus Amerika übernommen, da dort viele Linkshänder die Gerte mit der linken Hand führen und mit der rechten Hand die Kurbel bedienen. Für Rechtshänder, die die Gerte mit der rechten Hand führen und mit der linken Hand die Kurbel bedienen wollen, ist diese Ausführung nicht geeignet. Die Kurbel müßte sich dann bei einer stehenden Anordnung der Rolleneinheit auf der linken Seite des Gehäuses befinden. Es sind somit für Rechtshänder und Linkshänder unterschiedliche Versionen der Rolleneinheit erforderlich. Gleiches gilt dann, wenn die Rolleneinheit hängend, d. h. unter der Gerte befestigt werden soll. Auch hier sind grundsätzlich für Links- und Rechtshänder unterschiedliche Versionen notwendig. Sofern eine Schnurführung vorgesehen ist, ist es auch nicht möglich, eine für die stehende Montage vorgesehene Version ohne weiteres für die hängende Montage zu verwenden. Dokumenten US-A- 4223854 und US-5482220 offenbaren eine Rolleneinheit gemäß dem Oberbegriff des Anspruchs 13. Dokument US-A-3072356 offenbart ein Halter zum Befestigen einer Rolleneinheit an einer Angelrute.

Aufgabe der Erfindung ist es, eine Rolleneinheit aufzuzeigen, die alle möglichen Varianten einer Montage abdeckt, d. h. sowohl für Linkshänder, als auch für Rechtshänder für die stehende oder hängende Montage geeignet ist. Zur Lösung dieser Aufgabe ist eine Rolleneinheit entsprechend dem Patentanspruch 1 oder 19 ausgebildet. Ein Halter bzw. eine Angel sind Gegenstand der Ansprüche 25 bzw. 28.

Die Erfindung gestattet eine Einstellung der Rolleneinheit durch Schwenken oder Drehen um eine Achse parallel oder etwa parallel zur Achse der Spule. Hierdurch kann in jeder Montagesituation eine vorhandene Schnurführung genutzt und stets so ausgerichtet werden, daß diese Schnurführung bei an der Angelrute oder -gerte befestigter Rolleneinheit in der erforderlichen Weise nach vorne weist, d. h. zu dem dem Griffende abgewandten Ende der Angelgerte. Eine vorhandene Rücklaufsperre ist in ihrer Sperr-Richtung umschaltbar. Ein wesentlicher Vorteil der erfindungsgemäßen Ausbildung besteht weiterhin darin, daß alle Um- und Einstellungen ohne Werkzeug ausgeführt werden können.

Die Schnurführung besteht bei der Erfindung beispielsweise aus einem an einer Führung geführten Schlittenelement, welches wenigstens eine Schnuröffnung aufweist. Durch Drehen der Führung ist das Schlittenelement mit der Schnuröffnung einstellbar, so daß in der jeweiligen Drehrichtung der Spule mit der Schnurführung die Schnur gleichmäßig auf die Spule aufgewickelt werden kann.

Weiterbildungen der Erfindung sind Gegenstand der Unteransprüche. Die Erfindung wird im Folgenden anhand der Figuren an Ausführungsbeispielen näher erläutert. Es zeigen:
- Fig. 1: in vereinfachter Darstellung und in Seitenansicht eine Angelgerte zusammen mit einem Halter der Erfindung und einer Rolleneinheit oder Multi-Rolle der Erfindung;
- Fig. 2: in Einzeldarstellung den Rollenhalter in Draufsicht;

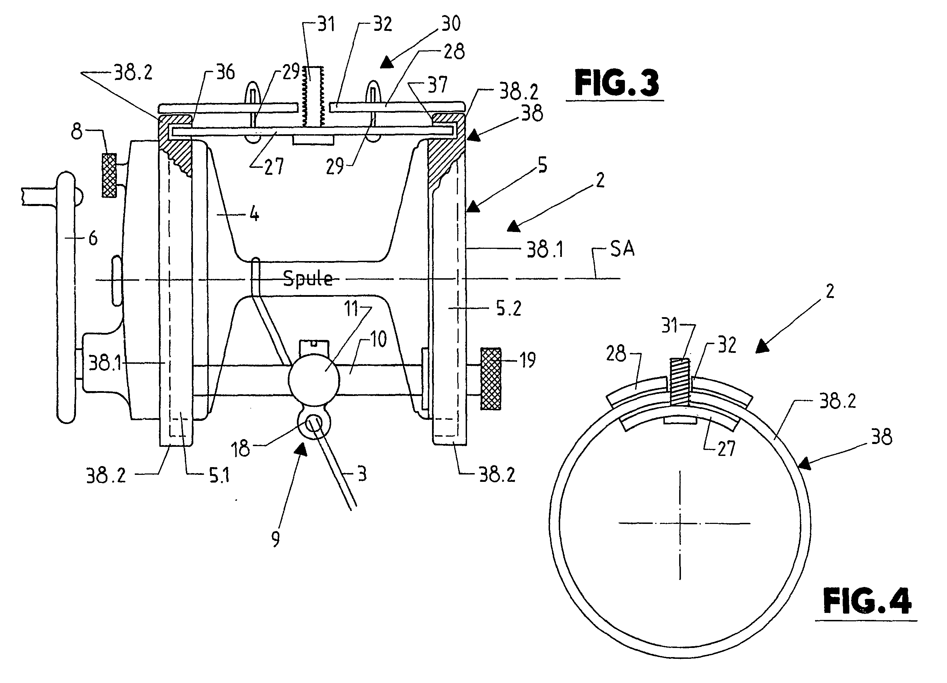

- Fig. 3: die Rolleneinheit zusammen mit den Klemmbacken des Rollenhalters, teilweise im Schnitt;
- Fig. 4: in vereinfachter schematischer Darstellung einen Schnitt entsprechend der Linie 1 - 1 der Figur 3, wobei Details der Rolleneinheit der einfacheren Darstellung wegen entfallen sind;

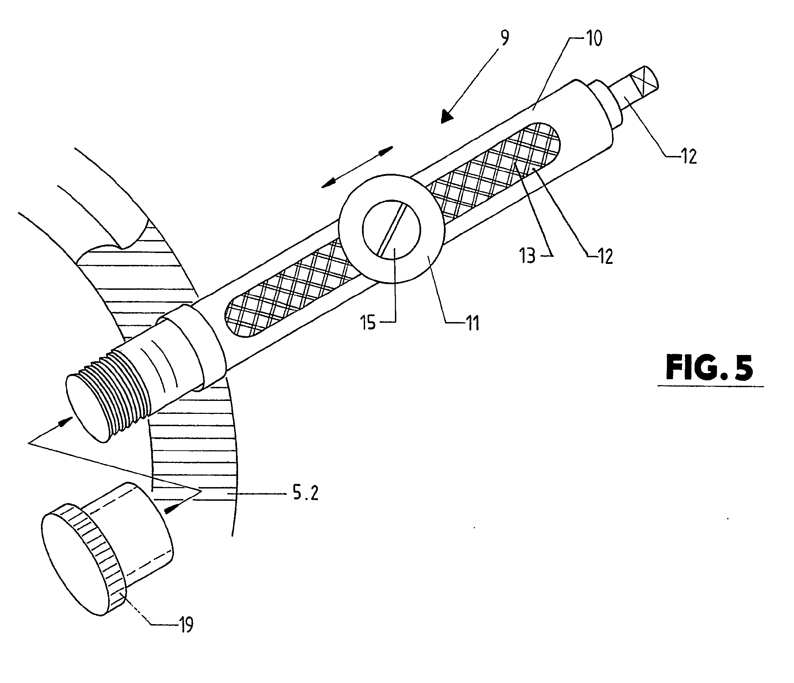

- Fig. 5: in vergrößerter Teildarstellung eine Gleitführung mit einem Antriebsschaft (Wormshaft) für eine Schnurführung;
- Fig. 6: eine Teildarstellung der Gleitführung, zusammen mit der zugehörigen Schnurführung in einer anderen Seitendarstellung;
- Fig. 7: einen Schnitt durch das Führungsrohr, die Antriebswelle sowie die an dem Führungsrohr geführte Schnurführung;
- Fig. 8: in sehr schematischer Darstellung die umschaltbare Rücklaufsperre der Winde bzw. Multi-Schnurrolle;
- Fig. 9 - 11: Darstellungen wie Fig. 5 - 7 bei einer weiteren Ausführungsform.

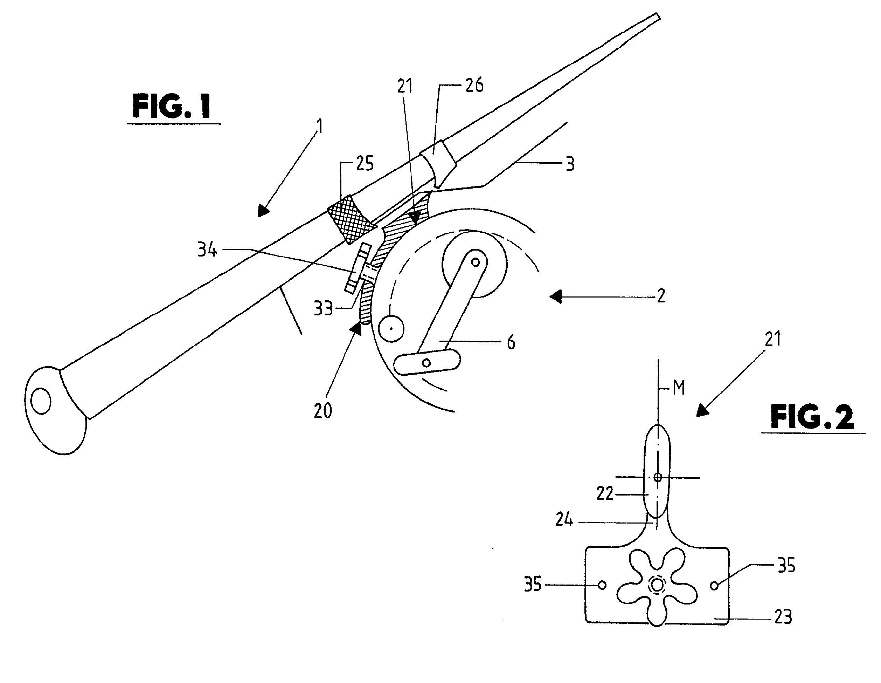

In den Figuren ist 1 eine Angelgerte oder -rute, an der eine Winde oder Rolleneinheit 2 zum Auf- und Abwickeln der Angelschnur vorgesehen ist. In der Darstellung der Figur 1 ist die Rolleneinheit 2 an der Gerte 1 hängend vorgesehen, d. h. sie befindet sich an der Unterseite. Weiterhin ist die Rolleneinheit 2 für einen Rechtshänder ausgebildet, d. h. sie ist mit der rechten Hand des Benutzers bedienbar.

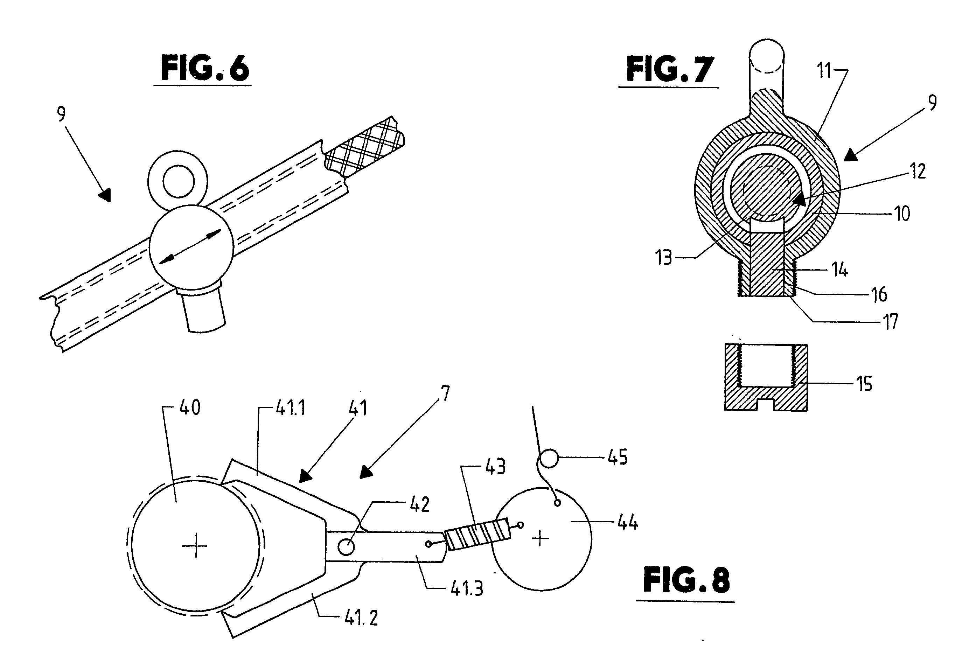

Die Rolleneinheit 2 besteht in an sich bekannter Weise aus einer Spule 4, die zum Auf und Abwickeln der Schnur 3 um eine Spulenachse SA drehbar in einem Spulengehäuse 5 bzw. an zwei dieses Spulen- oder Rollengehäuses bildenden und in der Spulenachse SA gegeneinander versetzten Gehäuseteilen 5.1 und 5.2 drehbar gelagert ist. Über eine Kurbel 6 an der Außenseite des Gehäuseteils 5.1 sowie über ein in diesem Gehäuseteil untergebrachtes, nicht dargestelltes Getriebe ist die Spule 4 antreibbar. Das Getriebe ist mit einer entriegelbaren Rücklaufsperre ausgestattet, die in der Figur 8 allgemein mit 7 bezeichnet ist und die im nicht entriegelten Zustand ein Drehen der Handkurbel 6 sowie der Spule 4 im Sinne eines Aufwickelns bzw. Einholens der Schnur 3 ermöglicht, zum Abwickeln der Schnur 3 von der Spule 4 aber entriegelbar ist. Weiterhin ist die Rücklaufsperre 7 über einen an der Außenfläche des Gehäuseteils 5.1 vorgesehenen Drehknopf 8 umschaltbar, so daß in der nachstehend noch näher beschriebenen Weise die Rolleneinheit 2 sowohl für Rechtshänder und für eine wahlweise Anbringung an der Unterseite oder an der Oberseite der Rute 1, als auch für Linkshänder, ebenfalls für eine wahlweise Anbringung an der Unterseite oder Oberseite der Gerte 1 möglich ist.

Zwischen den beiden Gehäuseteilen 5.1 und 5.2 ist parallel zur Spulenachse SA, gegenüber dieser aber versetzt und damit radial außerhalb der Spule 4 eine Schnurführung 9 vorgesehen, die in an sich bekannter Weise aus einem äußeren Führungsrohr 10, aus einem auf dem Führungsrohr 10 geführten Schlittenelement 11, aus einer in dem Führungsrohr drehbar gelagerten und achsgleich mit dem Führungsrohr angeordneten Welle 12, die als sogenannter "Wormshaft" mit zwei sich kreuzenden wendelförmigen Nuten 13 mit großer Steigung ausgebildet ist und die an ihrem in das Gehäuseteil 5.1 hineinragenden Ende über das Getriebe und die Handkurbel antreibbar ist. In die Steuernut 13 der Welle 12 greift ein am Schlittenelement 11 vorgesehenes Führungsstück 14 ein, welches austauschbar in einer von einer Verlängerung des Schlittenelementes gebildeten und durch eine Kappe 15 verschließbaren Aufnahme 16 vorgesehen ist.

An der der Aufnahme 16 gegenüberliegenden Seite bildet das Schlittenelement 11 an einem Vorsprung 17 eine Schnuröse 18. Mittels einer Klemmschraube 19 ist das Führungsrohr 10 um wenigstens 180° um seine Achse drehbar und in der jeweiligen Stellung durch Festklemmen fixierbar, und zwar derart, daß die Schnuröse 18 wahlweise z.B. an der einen oder anderen Seite einer Ebene angeordnet werden kann, die durch die Achse SA und die Achse des Führungsrohres bestimmt ist.

Wesentlicher Bestandteil der Erfindung ist der in den Figuren allgemein mit 20 bezeichnete Rollenhalter, mit dem die Rolleneinheit 2 an der Gerte 1 befestigbar ist, und zwar nicht nur wahlweise an der Unterseite bzw. hängend, an der Oberseite bzw. stehend, mit der Kurbel links oder rechts, sondern mit dem die Rolleneinheit 2 zum Einstellen auch um die Spulenachse SA um 360° drehbar und in der jeweiligen Einstellung festklemmbar ist, und zwar insbesondere derart, daß in jeder Art der Befestigung der Rolleneinheit 2 an der Angelgerte 1 und/oder für die Bedienung bzw. Verwendung durch Rechtshänder oder Linkshänder sich die Schnurführung 9 in der richtigen Position befindet, d. h. an der dem Handgriff 1.1 der Gerte abgewandten Seite der Rolleneinheit 2. Durch entsprechendes Einstellen des Führungsrohres 10 wird dann dafür gesorgt, daß auch die Schnuröse 18 in jeder getroffenen Einstellung die erforderliche Position in Bezug auf die Spule 4 aufweist.

Der Halter 20 besteht aus einem Basisteil 21, welches in der Figur 2 in Draufsicht dargestellt ist und einstückig mit einer Lasche 22, einer Klemmplatte 23 und einem die Lasche 22 und die Platte 23 verbindenden Arm 24 hergestellt ist. Das Basisteil 21 ist bei der dargestellten Ausführungsform symmetrisch zu einer Mittelebene M ausgebildet, in der auch die Längserstreckung der Lasche 22 liegt, die in der Darstellung der Figur 2 seitlich von einer Längsseite der rechteckförmigen Platte 23 angeordnet ist. Mit der Lasche 22 ist der Halter 20 an der Gerte 1 befestigbar, und zwar in der für Rolleneinheiten üblichen Weise unter Verwendung zweier Halteringe 25 und 26, die passende Aufnahmen für jeweils ein Ende der Lasche 22 bilden und zwischen denen die Lasche 22 nach dem Einführen der Laschenenden in die Aufnahmen festklemmbar ist, so daß das Basisteil 21 dann mit der Lasche 22 gegen die Außenfläche der Gerten 1 anliegend an dieser gehalten ist und der Arm 24 mit der Platte 23 von der Lasche 22 wegsteht.

Die Platte 23 ist an ihrer der Lasche 22 abgewandten Seite um eine Achse senkrecht zur Mittelebene M konkav gekrümmt, und zwar mit einem Krümmungsradius, der zumindest annähernd dem Krümmungsradius entspricht, den die in ihrem Durchmesser identischen, zumindest an ihrer Außenfläche kreisscheibenförmigen Gehäuseteile 5.1 und 5.2 außen aufweisen. Der Halter besteht weiterhin aus zwei Klemmbacken 27 und 28, die ebenfalls plattenförmig und leicht gekrümmt bzw. gewölbt ausgeführt sind, und zwar wiederum mit einem Krümmungsradius, der dem Krümmungsradius der äußeren Ringfläche der Gehäuseteile 5.1 und 5.2 an ihrem Umfang zumindest annähernd entspricht. Die beiden plattenförmigen Klemmbacken 27 und 28, die bei der dargestellten Ausführungsform etwa gleiche Größe aufweisen, sind paketartig übereinander angeordnet und durch Führungs- oder Arretierstifte 29 miteinander verbunden, so daß der Abstand zwischen den beiden Klemmbacken 27 und 28 in gewissen Grenzen variabel ist, die beiden Klemmbacken aber eine Klemmbackeneinheit 30 bilden.

An einem Klemmbacken, nämlich am Klemmbacken 27, der mit seiner konvexen Seite der konkaven Seite des Klemmbackens 28 benachbart angeordnet ist, ist in der Mitte ein Gewindebolzen 31 vorgesehen, der durch eine Bohrung 32 in der Mitte des Klemmbackens 28 hindurchreicht und über die dem Klemmbacken 27 abgewandte konvexe Seite des Klemmbackens 28 vorsteht. An der Platte 23 des Basisteils 21 ist ein Muttergewindestück 33 mit Handrad drehbar vorgesehen. Mit dem Muttergewindestück 33 ist die Klemmbackeneinheit 30 an der konkaven Seite der Platte 23 des Basisteils 21 festschraubbar, und zwar derart, daß auch die beiden Klemmbacken 27 und 28 gegeneinander verspannt werden. Die Platte 23 besitzt Bohrungen 35 für die Arretierstifte 29.

Für die Befestigung an dem Halter 20 sind die beiden Gehäuseteile 5.1 und 5.2 an ihrem Außenumfang jeweils mit einer die Achse der Gehäuseteile bzw. die Spulenachse SA konzentrisch umschließenden Ringnut 36 bzw. 37 versehen, die jeweils zur Innenseite der Gehäuseteile 5.1 bzw. 5.2, d. h. zu den zwischen diesen Gehäuseteilen gebildeten und die Spule 4 aufnehmenden Raum hin offen sind. Bei am Halter 20 befestigter Rolleneinheit 2 reicht der als rechteckförmige Platte ausgebildete Klemmbacken 27 mit einer Schmalseite in die Ringnut 36 im Gehäuseteil 5.1 und mit der anderen Schmalseite in die Ringnut 37 im Gehäuseteil 5.2 hinein. Der Klemmbacken 28 liegt im Bereich seiner beiden Schmalseiten gegen die ringförmige Außenfläche des Gehäuseteils 5.1 bzw. des Gehäuseteils 5.2 an. Nach dem Festziehen des Muttergewindestücks 33 ist die Rolleneinheit 2 dann über die Klemmbackeneinheit 30 und das Basisteil 21 bzw. über den Halter 20 an der Angelgerte 2 fixiert, und zwar derart, daß die Spulenachse SA senkrecht zu einer die Längsachse der Angelgerte 1 einschließenden Ebene bzw. senkrecht zur Mittelebene M des Halters 20 orientiert ist. Durch geringfügiges Lösen des Muttergewindestückes 33 ist die Rolleneineit 2 durch Drehen um die Spulenachse SA in die jeweils gewünschte bzw. erforderliche Position einstellbar.

Die beiden Ringnuten 36 und 37 sind beispielsweise durch eine entsprechende Formgebung der Gehäuseteile 5.1 und 5.2 oder durch eine bestimmte Formgebung von Deckeln dieser Gehäuseteile gebildet, oder aber dadurch, daß an der Außenfläche der kreisscheibenförmigen Gehäuseteile jeweils ein Ring 38 befestigt ist, der einen ersten in einer Ebene senkrecht zur Ringachse verlaufenden Ringabschnitt 38.1 sowie außen liegend die Ringachse konzentrisch umschließenden kreiszylinderförmigen Ringabschnitt 38.2 aufweist. Mit dem Ringabschnitt 38.1 erfolgt die Befestigung des jeweiligen Ringes 38 an der Außenfläche des Gehäuseteils 5.1 bzw. 5.2. Der Ringabschnitt 38.2 ist bei an der Angelgerte 1 befestigter Rolleneinheit zwischen den beiden Klemmbacken 27 und 28 aufgenommen.

Die Figur 8 zeigt in sehr vereinfachter Darstellung eine mögliche Ausführungsform der in ihrer Wirkung umschaltbaren Rücklaufsperre 7. Diese Rücklaufsperre besteht im wesentlichen aus einem Klinkenrad 40 und einer Sperrklinke 41. Die Sperrklinke 41, die bei 42 schwenkbar gelagert ist, weist zwei Gabelarme 41.1 und 41.2 auf, zwischen denen das Klinkenrad 40 derart angeordnet ist, daß in der einen Schwenkstellung der Sperrklinke 41 diese mit ihrem Klinkenarm 41.1 ein Drehen des Klinkenrades 40 in der einen Richtung, d. h. bei der Darstellung der Figur 7 im Uhrzeigersinn sperrt und in der anderen Richtung, d. h. entgegen dem Uhrzeigersinn zuläßt, während in der anderen Stellung der Sperrklinke 41 diese mit ihrem Klinkenarm 42.2 das Drehen des Klinkenrades 40 entgegen dem Uhrzeigersinn sperrt und im Uhrzeigersinn ermöglicht. An einem bezogen auf den Schwenkpunkt 42 den Klinkenarmen 41.1 und 41.2 abgewandten Ende 41.3 ist die Sperrklinke 41 über eine Feder 43 mit einem Drehglied 44 verbunden. Das Drehglied 44 befindet sich an einer Achse, an der auch der Drehknopf 8 vorgesehen ist. Durch Drehen des Drehgliedes 44 bzw. des Drehknopfes 8 wird der gehäuseseitige Angriffspunkt der Feder 43 so verlagert, daß die Sperrklinke 41 um das Gelenk 42 aus der einen Stellung, der beispielsweise der Arm 41.1 mit dem Klinkenrad 40 in Eingriff steht, in die andere Stellung bewegt wird, in der der Arm 42.2 mit dem Klinkenrad 40 in Eingriff steht. Mit einer weiteren Feder 45 ist durch Übertotpunktwirkung erreicht, daß das Drehglied 44 nur jeweils zwei Endstellungen einnehmen kann. Selbstverständlich sind auch andere Möglichkeiten für ein Umschalten der Rücklaufsperre 7 möglich. Die Rücklaufsperre besitzt noch eine nicht dargestellte Entriegelung.

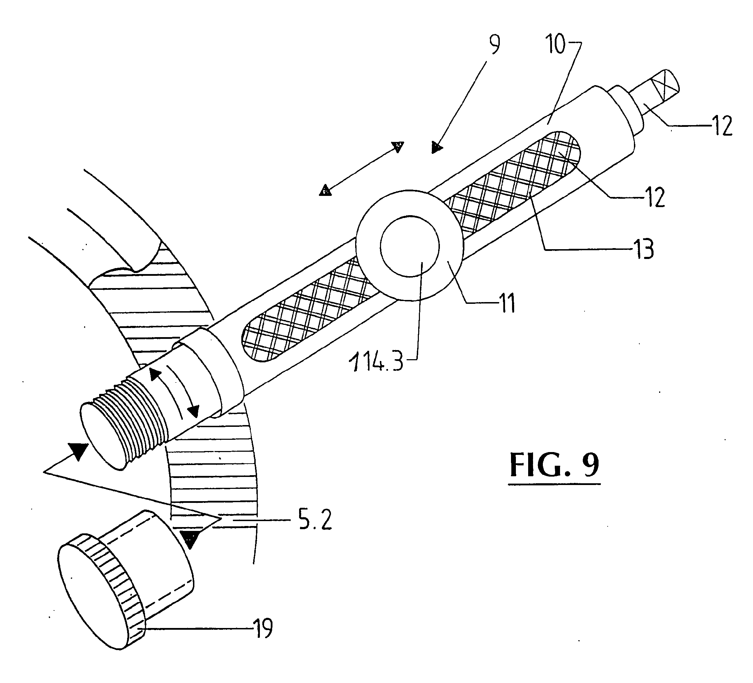

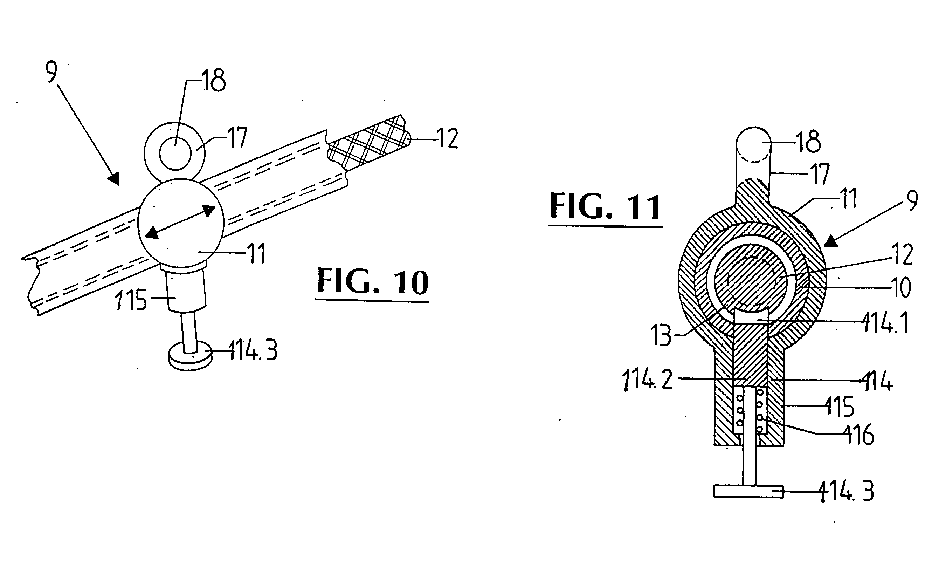

Die Figuren 9-11 zeigen Darstellungen ähnlich den Figuren 6 - 8 bei einer weiteren möglichen Ausführungsform mit einer Schnellentriegelung für das die Schnuröse aufweisende Schlittenelement 11.

Bei dieser Ausführung greift in die Steuernut 13 der Welle 12 ein am Schlittenelement 11 vorgesehenes Führungsstück 114.1 ein, welches von einem stiftförmigen Ende eines Bolzens 114 gebildet ist. Letzterer ist einer von einer Verlängerung des Schlittenelementes gebildeten Aufnahme 115 axial und radial zu der Welle 12 verschiebbar vorgesehen, und zwar mit einem im Querschnitt vergrößerten Abschnitt 114.2. Durch eine Feder 116 ist der Bolzen 114 in Richtung der Welle 12 vorgespannt, sodass das Führungsstück 114.1 zuverlässig in die wendelförmigen Nuten 13 der Welle 12 eingreift. An einem radial außen liegenden Ende ist der Bolzen 114 mit einem Griff 114.3 versehen. Durch Ziehen an diesem Griff 114.3 gegen die Wirkung der Feder 116 kann das Führungsstück 114.1 problemlos außer Eingriff mit der Welle 12 gebracht werden, sodass dann ein Verschieben des Schlittenelementes 11 in Längsrichtung des Führungsrohres 10 möglich ist. Nach dem Loslassen des Griffelementes 114.3 rastet das Führungsstück 114 wiederum in eine der sich kreuzenden wendelförmigen Nuten 13 ein.

An der der Aufnahme 115 gegenüberliegenden Seite bildet das Schlittenelement einen Vorsprung 117 mit der Schnuröse 18. Zur Einstellung der Schnuröse 18 in Achsrichtung des Führungsrohres 10 und damit in Richtung der Achse SA wird durch Ziehen an dem Griffelement 114.3 das Führungsstück 114 außer Eingriff mit der Welle 12 gebracht, sodass auch nach der Reparatur einer gerissenen Angelschnur 3 durch entsprechende axiale Einstellung der Schnuröse 18 ein an die letzten Angelschnurwindungen auf der Schnurspule 4 dicht anschließendes weiteres Aufwickeln der Angelschnur 3 möglich ist.

### Bezugszeichenliste

- 1: Angelrute oder -gerte
- 2: Rolleneinheit
- 3: Angelschnur
- 4: Schnurspule
- 5: Gehäuse
- 5.1, 5.2: Gehäuseteil
- 6: Kurbel
- 7: Rücklaufsperre
- 8: Drehknopf zur Umschaltung der Rücklaufsperre
- 9: Schnurführung
- 10: Führungsrohr
- 11: Schlittenelement
- 12: Wormshaft oder Welle
- 13: Nut
- 14: Führungsstück
- 15: Kappe
- 16: Aufnahme
- 17: Vorsprung
- 18: Schnuröse
- 19: Klemm-Mutter
- 20: Halter
- 21: Basisteil
- 22: Lasche
- 23: Platte
- 24: Arm
- 25, 26: Haltering
- 27, 28: Klemmbacken
- 29: Arretierungsstift
- 30: Klemmbackeneinheit
- 31: Gewindeschaft
- 32: Bohrung
- 33: Muttergewindestück
- 34: Handrad
- 35: Bohrung für Arretierungsstift
- 36, 37: Ringnut
- 38: Ring
- 38.1, 38.2: Ringabschnitt
- 40: Klinkenrad
- 41: Sperrklinke
- 41.1, 41.2: Sperrklinkenarm
- 41.3: Ende der Sperrklinke
- 42: Lager
- 43: Sperrklinkenfeder
- 44: Lagerelement für Feder 43 oder Drehglied
- 45: Feder

- 114: Bolzen
- 114.1: Führungsstück
- 114.2: Bolzenabschnitt
- 114.3: Griffelement
- 115: Aufnahme
- 116: Feder

- SA: Spulenachse
- M: Mittelebene des Basisteils 21

## Patentansprüche

1. Rolleneinheit für eine Angelschnur zur Verwendung an einer Angelgerte (1), mit einem Gehäuse (5), mit einer am Gehäuse (5) drehbar gelagerten und durch eine Handkurbel (6) über ein Getriebe drehbare Spule (4) zum Auf und Abwickeln der Schnur (3) sowie mit einem Halter (20) zum Befestigen der Rolleneinheit (2) an der Angelgerte (1), **dadurch gekennzeichnet, dass** die Rolleneinheit (2) am Halter (20) einstellbar vorgesehen ist, und zwar durch Drehen oder Schwenken um eine Achse (SA) parallel oder annähernd parallel zu der Achse der Spule (4).

2. Rolleneinheit nach Anspruch 1, **dadurch gekennzeichnet, dass** am Gehäuse (5) wenigstens eine Schnurführung (9) mit einem auf einer Führung (10) parallel zur Achse der Spule (4) geführten Schlittenelement (11) mit Schnuröse (18) vorgesehen ist, und dass das Schlittenelement (11) und oder die Schnuröse (18) um die Achse der Führung um wenigstens 180° schwenkbar sind oder
dass am Gehäuse (5) wenigstens eine Schnurführung (9) mit einem auf einer Führung (10) parallel zur Achse der Spule (4) geführten Schlittenelement (11) und am Schlittenelement (11) wenigstens eine radial gegenüber der Führung (10) versetzte Schnuröse (18) vorgesehen ist, und dass die Schlittenführung (10) mit dem Schlitten (11) durch Drehen oder Schwenken um die Achse der Führung einstellbar ist.

3. Rolleneinheit nach einem der vorhergehenden Ansprüche, **dadurch gekennzeichnet, dass** das Gehäuse (5) von wenigstens zwei Gehäuseteilen (5.1, 5.2) gebildet ist, zwischen denen die Spule (4) drehbar gelagert ist und/oder dass das Gehäuse (5) bzw. dessen Gehäuseteile (5.1, 5.2) am Gehäuseumfang einstellbar mit dem Halter (20) verbunden sind und/oder
dass der Halter (20) wenigstens zwei Klemmbacken (27, 28) zum Festklemmen des Gehäuses (5) oder der Gehäuseteile (5.1, 5.2) aufweist.

4. Rolleneinheit nach einem der vorhergehenden Ansprüche, **dadurch gekennzeichnet, dass** das Gehäuse (5) bzw. dessen Gehäuseteile (5.1, 5.2) vorzugsweise im Umfangsbereich des Gehäuses zum Festklemmen wenigstens zwei zwischen Klemmbacken (27, 28) festklemmbare Gehäuseabschnitte (38.2) aufweist, wobei die Gehäuseabschnitte (38.2) von Wandabschnitten jeweils einer Ringnut (36, 37) gebildet sind.

5. Rolleneinheit nach Anspruch 4, **dadurch gekennzeichnet, dass** die Gehäuseabschnitte von jeweils einem Abschnitt (38.2) eines Tragringes (38) gebildet sind.

6. Rolleneinheit nach einem der vorhergehenden Ansprüche, **dadurch gekennzeichnet, dass** das die Kurbel (6) antriebsmäßig mit der Spule (4) verbindende Getriebe eine Rücklaufsperre (7) aufweist, und dass die Rücklaufsperre (7) in ihrer Sperr-Richtung umschaltbar ist.

7. Rolleneinheit nach einem der Ansprüche 3 bis 5, **dadurch gekennzeichnet, dass** das Gehäuse (5) durch Schrauben am Halter (20) festklemmbar ist und/oder
dass sich die Klemmbacken (27, 28) in einer Achsrichtung parallel oder annähernd parallel zu der Spulenachse (SA) zwischen den Gehäuseteilen (5.1, 5.2) erstrecken.

8. Rolleneinheit nach einem der vorhergehenden Ansprüche, **gekennzeichnet durch** wenigstens eine am Gehäuse (5) vorgesehenen Schnurführung mit einem auf einer Führung (10) parallel zur Achse der Spule (4) geführten Schlittenelement (11), an dem wenigstens eine Schnuröse (18) sowie ein Führungsstück (114.1) vorgesehen sind, welches mit wenigstens einer wendelartigen Führung (13) an einem über das Getriebe antreibbaren Welle (12) zusammen wirkt, wobei das Führungsstück (114.1) manuell aus einer mit der Führung (13) in Eingriff stehenden Zustand in einen Zustand bewegbar ist, in welchem sich das Führungsstück (114.1) außerhalb der wenigstens einen wendelartigen Führung (13) befindet.

9. Rolleneinheit nach Anspruch 8, **dadurch gekennzeichnet, dass** das Führungsstück (114.1) durch wenigstens ein Federelement (16) für einen Eingriff in die wenigstens eine Führung (13) vorgespannt ist und/oder
dass das Führungsstück (114.1) von einem Bolzen (114) gebildet ist, der durch das wenigstens eine Federelement in seinen Eingriffszustand vorgespannt ist.

10. Rolleneinheit nach Anspruch 8 oder 9, **dadurch gekennzeichnet, dass** das Führungsstück (114.1) mit einem Griffelement oder Griffstück (114.3) verbunden ist.

11. Rolleneinheit nach einem der vorhergehenden Ansprüche, **dadurch gekennzeichnet, dass** die Rolleneinheit (2) an dem Halter (20) einstellbar vorgesehen ist, und zwar durch Drehen oder Schwenken um eine Achse (SA) parallel oder annähernd parallel zu der Achse der Spule (4).

12. Rolleneinheit nach einem der vorhergehenden Ansprüche, **dadurch gekennzeichnet, dass** die wenigstens eine Schnuröse (18) am Schlittenelement (11) radial gegenüber der Führung (10) versetzt vorgesehen ist, und dass die Schlittenführung (10) mit dem Schlitten (11) durch Drehen oder Schwenken um die Achse der Führung einstellbar ist.

13. Rolleneinheit für eine Angelschnur zur Verwendung an einer Angelgerte (1), mit einem Gehäuse (5), mit einer am Gehäuse (5) drehbar gelagerten und durch eine Handkurbel (6) über ein Getriebe drehbare Spule (4) zum Auf- und Abwickeln der Schnur (3), mit einem Halter (20) zum Befestigen der Rolleneinheit (2) an der Angelgerte (1) und mit wenigstens einer am Gehäuse (5) vorgesehenen Schnurführung mit einem auf einer Führung (10) parallel zur Achse der Spule (4) geführten Schlittenelement (11), an dem wenigstens eine Schnuröse (18) sowie ein Führungsstück (114.1) vorgesehen sind, welches mit wenigstens einer wendelartigen Führung (13) an einem über das Getriebe antreibbaren Welle (12) zusammen wirkt, wobei das Führungsstück (114.1) manuell aus einer mit der Führung (13) in Eingriff stehenden Zustand in einen Zustand bewegbar ist, in welchem sich das Führungsstück (114.1) außerhalb der wenigstens einen wendelartigen Führung (13) befindet, **dadurch gekennzeichnet, dass** das die Kurbel (6) antriebsmäßig mit der Spule (4) verbindende Getriebe eine in ihrer Sperr-Richtung umschaltbare Rücklaufsperre (7) aufweist.

14. Rolleneinheit nach Anspruch 13, **dadurch gekennzeichnet, dass** das Führungsstück (114.1) durch wenigstens ein Federelement (16) für einen Eingriff in die wenigstens eine Führung (13) vorgespannt ist und/oder
dass das Führungsstück (114.1) von einem Bolzen (114) gebildet ist, der durch das wenigstens eine Federelement in seinen Eingriffszustand vorgespannt ist.

15. Rolleneinheit nach Anspruch 13 oder 14, **dadurch gekennzeichnet, dass** das Führungsstück (114.1) mit einem Griffelement oder Griffstück (114.3) verbunden ist und/oder
dass die Rolleneinheit (2) an dem Halter (20) einstellbar vorgesehen ist, und zwar durch Drehen oder Schwenken um eine Achse (SA) parallel oder annähernd parallel zu der Achse der Spule (4).

16. Rolleneinheit nach einem Ansprüche 13 bis 15, **dadurch gekennzeichnet, dass** die wenigstens eine Schnuröse (18) am Schlittenelement (11) radial gegenüber der Führung (10) versetzt vorgesehen ist, und dass die Schlittenführung (10) mit dem Schlitten (11) durch Drehen oder Schwenken um die Achse der Führung einstellbar ist.

17. Halter für eine Rolleneinheit nach einem der Ansprüche 1 bis 12 zur Verwendung an einer Angelgerte (1), **dadurch gekennzeichnet, dass** der Halter (20) am Gehäuseumfang der Rolleneinheit (2) befestigbar ist und dass die Rolleneinheit (2) am Halter (20) einstellbar ist, und zwar durch Drehen oder Schwenken um eine Achse (SA) parallel oder annähernd parallel zur Achse einer Spule (4) der Rolleneinheit (2).

18. Halter nach Anspruch 17, **dadurch gekennzeichnet, dass** er wenigstens zwei Klemmbacken (27, 28) zum Festklemmen am Gehäuseumfang aufweist.

## Claims

1. Reel unit for a fishing line for use on a fishing rod (1), with a housing (5), with a spool (4) mounted rotatable on the housing (5) and rotatable by a crank handle (6) through gearing for winding up and unwinding the line(3), as well as with a holder (20) for fixing the reel unit (2) on the fishing rod (1), **characterised in that** the reel unit (2) is provided adjustable on the holder (20), namely through rotation or pivotal action around an axis (SA) parallel or approximately parallel to the axis of the spool (4).

2. Reel unit according to claim 1 **characterised in that** on the housing (5) there is at least one line guide (9) with a slide element (11) with line eyelet (8) which can be guided on a guide (10) parallel to the axis of the spool (4), and that the slide element (11) and/or the line eyelet (18) are capable of pivoting at least 180° round the axis of the guide, or that on the housing (5) there is at least one line guide (9) with a slide element (11) guided on a guide (10) parallel to the axis of the spool (4) and on the slide element (11) there is at least one line eyelet (18) which is radially off-set relative to the guide (10), and that the slide guide (10) together with the slide (11) can be adjusted through rotation or pivotal action around the axis of the guide.

3. Reel unit according to one of the preceding claims **characterised in that** the housing (5) is formed by at least two housing parts (5.1, 5.2) between which the spool (4) is rotatably mounted and/or that the housing (5) or its housing parts (5.1, 5.2) are connected around the periphery of the housing adjustable with the holder (20) and/or that the holder (20) has at least two clamping jaws (27, 28) for firmly clamping the housing (5) or the housing parts (5.1, 5.2).

4. Reel unit according to one of the preceding claims **characterised in that** the housing (5) or its housing parts (5.1, 5.2) preferably has/have in the peripheral area of the housing at least two housing sections (38.2) which can be firmly clamped between clamping jaws (27, 28) wherein the housing sections (38.2) are each formed by wall sections of ring grooves (36, 37).

5. Reel unit according to claim 4 **characterised in that** the housing sections are each formed by a section (38.2) of a support ring (38).

6. Reel unit according to one of the preceding claims **characterised in that** the gearing which connects the crank (6) in driving connection with the spool (4) has a non-return mechanism (7), and that the non-return mechanism (7) can be reversed in its locking direction.

7. Reel unit according to one of claims 3 to 5 **characterised in that** the housing (5) can be firmly clamped through screws on the holder (20), and/or that the clamping jaws (27, 28) extend in the axial direction parallel or approximately parallel to the spool axis (SA) between the housing parts (5.1, 5.2).

8. Reel unit according to one of the preceding claims **characterised by** at least one line guide provided on the housing (5) and having a slide element (11) guided on a guide (10) parallel to the axis of the spool (4), wherein at least one line eyelet (18) as well as a guide member (114.1) are provided on the slide element to interact with at least one helical guide (13) on a shaft (12) which can be driven through the gearing, wherein the guide member (114.1) can be moved manually from a position engaging with the guide (13) into a position in which the guide member (114.1) is located outside of the at least one helical guide (13).

9. Reel unit according to claim 8 **characterised in that** the guide member (114.1) is pretensioned by at least one spring element (16) for engagement in the at least one guide (13) and/or that the guide member (114.1) is formed by a bolt (114) which is pretensioned through the at least one spring element into its engagement position.

10. Reel unit according to claim 8 or 9 **characterised in that** the guide member (114.1) is connected to a handle element or grip member (114.3).

11. Reel unit according to one of the preceding claims **characterised in that** the reel unit (2) is provided adjustable on the holder (20), namely through rotation or pivotal action about an axis (SA) parallel or approximately parallel to the axis of the spool (4).

12. Reel unit according to one of the preceding claims **characterised in that** the at least one line eyelet (18) is provided on the slide element (11) radially off-set from the guide (10), and that the slide guide (10) can be adjusted with the slide (11) through rotation or pivotal action about the axis of the guide.

13. Reel unit for a fishing line for use on a fishing rod (1), with a housing (5) with a spool (4) mounted rotatable on the housing (5) and rotatable by a crank handle (6) through gearing for winding up and unwinding the line (3), with a holder (20) for fixing the reel unit (2) on the fishing rod (1) and with at least one line guide provided on the housing (5) having a slide element (11) guided on a guide (10) parallel to the axis of the spool (4), wherein at least one line eyelet (18) and a guide member (114.1) are provided on the slide element (11) to interact with at least one helical guide (13) on a shaft (12) which can be driven through the gearing, wherein the guide member (114.1) can be moved manually from a position engaging with the guide (13) into a position in which the guide member (114.1) is located outside of the at least one helical guide (13) **characterised in that** the gearing which connects the crank (6) in driving connection with the spool (4) has a non-return mechanism (7) which can be reversed in its locking direction.

14. Reel unit according to claim 13 **characterised in that** the guide member (114.1) is pretensioned through at least one spring element (16) for engagement into the at least one guide (13), and/or that the guide member (114.1) is formed by a bolt (114) which is pretensioned by the at least one spring element into its engaged position.

15. Reel unit according to claim 13 or 14 **characterised in that** the guide member (114.1) is connected to a handle element or grip member (114.3) and/or that the reel unit (2) is provided adjustable on the holder (20), namely through rotation or pivotal action around an axis (SA) parallel or approximately parallel to the axis of the spool (4).

16. Reel unit according to one of claims 13 to 15 **characterised in that** the at least one line eyelet (18) is provided on the slide element (11) radially off set from the guide (10) and that the slide guide (10) is adjustable with the slide (11) through rotation or pivotal action around the axis of the guide.

17. Holder for a reel unit according to one of claims 1 to 12 for use on a fishing rod (1) **characterised in that** the holder (20) is fixable on the housing periphery of the reel unit (2) and that the reel unit (2) is adjustable on the holder (20), namely through rotation or pivotal action around an axis (SA) parallel to approximately parallel to the axis of the spool (4) of the reel unit (2).

18. Holder according to claim 17 **characterised in that** it has at least two clamping jaws (27, 28) for fixedly clamping on the housing periphery.

## Revendications

1. Unité de moulinet pour une ligne à usage sur une canne à pêche (1), comprenant un boîtier (5), une bobine (4) montée à rotation sur le boîtier (5) et rotative à l'aide d'une manivelle (6) via un engrenage pour enrouler et dérouler le fil (3), ainsi qu'un support (20) pour fixer l'unité de moulinet (2) à la canne à pêche (1), **caractérisée en ce que** l'unité de moulinet (2) se présente de manière réglable sur le support (20) et ce, par rotation ou pivotement autour d'un axe (SA) parallèlement ou presque parallèlement à l'axe de la bobine (4).

2. Unité de moulinet selon la revendication 1, **caractérisée en ce qu'**il est prévu sur le boîtier (5) au moins un guide-fil (9) avec un coulisseau (11) guidé sur une coulisse (10) parallèlement à l'axe de la bobine (4) et muni d'un oeillet de fil (18) et **en ce que** e coulisseau (11) et/ou l'oeillet de fil (18) est ou sont pivotants autour de l'axe de la coulisse sur au moins 18.0 ° ou
**en ce qu'**il est prévu sur le boîtier (5) au moins un guide-fil (9) avec un coulisseau (11) guidé sur une coulisse (10) parallèlement à l'axe de la bobine (4) et sur le coulisseau (11) au moins un oeillet guide-fil (18) en décalage radial par rapport à la coulisse (10) et **en ce que** la coulisse de guidage (10) peut être ajustée avec le coulisseau (11) par rotation ou pivotement autour de l'axe du guidage.

3. Unité de moulinet selon l'une quelconque des revendications précédentes, **caractérisée en ce que** le boîtier (5) est constitué d'au moins deux parties de boîtier (5.1, 5.2), entre lesquelles la bobine (4) est montée à rotation et/ou **en ce que** le boîtier (5) ou ses parties de boîtier (5.1, 5.2) est ou sont raccordées au support de manière ajustable sur la périphérie du boîtier et/ou
**en ce que** le support (20) présente au moins deux mâchoires de serrage (27, 28) pour bloquer le boîtier (5) ou les parties de boîtier (5.1, 5.2).

4. Unité de moulinet selon l'une quelconque des revendications précédentes, **caractérisée en ce que** le boîtier (5) ou ses parties de boîtier (5.1, 5.2) présente(nt) de préférence dans la zone périphérique du boîtier pour le blocage au moins deux segments de boîtier (38.2) bloquables entre les mâchoires de serrage (27, 28), les segments de boîtier (38.2) étant constitués de segments de paroi, respectivement, d'une rainure annulaire (36, 37).

5. Unité de moulinet selon la revendication 4, **caractérisée en ce que** les segments de boîtier sont formés, respectivement, d'un segment (38.2) d'un anneau de support (38).

6. Unité de moulinet selon l'une quelconque des revendications précédentes, **caractérisée en ce que** l'engrenage raccordant la manivelle (6) à la bobine (4) en entraînement présente un dispositif antiretour (7) et **en ce que** le dispositif anti-retour (7) peut être commuté dans son sens de blocage.

7. Unité de moulinet selon l'une quelconque des revendications 3 à 5, **caractérisée en ce que** le boîtier (5) peut être bloqué par des vis au support (20) et/ou
**en ce que** les mâchoires de serrage (27, 28) s'étendent dans une direction axiale parallèle ou pratiquement parallèle à l'axe de la bobine (SA) entre les parties de boîtier (5.1, 5.2).

8. Unité de moulinet selon l'une quelconque des revendications précédentes, **caractérisée par** au moins un guide-fil agencé sur le boîtier (5) avec un coulisseau (11) guidé sur une coulisse (10) parallèlement à l'axe de la bobine (4), coulisseau qui présente au moins un oeillet guide-fil (18) ainsi qu'un élément de guidage (114.1), qui coopère avec au moins un guidage hélicoïdal (13) sur un arbre (12) qui peut être entraîné via l'engrenage, l'élément de guidage (114.1) pouvant être déplacé manuellement d'un état en prise avec le guidage (13) à un état dans lequel l'élément de guidage (114.1) se trouve en dehors du au moins un guidage hélicoïdal (13).

9. Unité de moulinet selon la revendication 8, **caractérisée en ce que** l'élément de guidage (114.1) est précontraint par au moins un élément à ressort (16) pour s'engager dans le au moins un guidage (13) et/ou
**en ce que** l'élément de guidage (114.1) est formé d'un boulon (114) qui est précontraint par le au moins un élément à ressort lorsqu'il est en prise.

10. Unité de moulinet selon la revendication 8 ou 9, **caractérisée en ce que** l'élément de guidage (114.1) est raccordé à un élément de prise ou à une pièce de prise (114.3).

11. Unité de moulinet selon l'une quelconque des revendications précédentes, **caractérisée en ce que** l'unité de moulinet (2) est agencée de manière ajustable sur le support (20) et ce, par rotation ou pivotement autour d'un axe (SA) parallèlement ou presque parallèlement à l'axe de la bobine (4).

12. Unité de moulinet selon l'une quelconque des revendications précédentes, **caractérisée en ce que** le au moins un oeillet guide-fil (18) est agencé sur le coulisseau (11) en décalage radial par rapport à la coulisse (10) et **en ce que** la coulisse (10) peut être ajustée par le coulisseau (11) par rotation ou pivotement autour de l'axe de la coulisse.

13. Unité de moulinet pour fil à utiliser sur canne à pêche (1), comprenant un boîtier (5), une bobine (4) montée à rotation sur le boîtier (5) et rotative à l'aide d'une manivelle (6) via un engrenage pour enrouler et dérouler le fil (3), un support (20) pour fixer l'unité de moulinet (2) à la canne à pêche (1) et comprenant au moins un guide-fil agencé sur le boîtier (5) avec un coulisseau (11) guidé sur une coulisse (10) parallèlement à l'axe de la bobine (4), lequel coulisseau présente au moins un oeillet guide-fil (18) ainsi qu'une pièce de guidage (114.1) qui coopère avec au moins un guidage hélicoïdal (13) sur un arbre (12) qui peut être entraîné via l'engrenage, dans laquelle la pièce de guidage (114.1) peut être déplacée manuellement d'un état en prise avec le guidage (13) à un état, dans lequel la pièce de guidage (114.1) se trouve en dehors du au moins un guidage hélicoïdal (13), **caractérisée en ce que** l'engrenage raccordant la manivelle (6) à la bobine (4) en entraînement présente un dispositif anti-retour (7) qui peut être commuté dans son sens de blocage.

14. Unité de moulinet selon la revendication 13, **caractérisée en ce** la pièce de guidage (114.1) est précontrainte par au moins un élément à ressort (16) pour s'engager dans le au moins un guidage (13) et/ou
en ce que la pièce de guidage (114.1) est formée d'un boulon (114) qui est précontraint par le au moins un élément à ressort lorsqu'elle est en prise.

15. Unité de moulinet selon la revendication 13 ou 14, **caractérisée en ce que** la pièce de guidage (114.1) est raccordée à un élément de prise ou à une pièce de prise (114.3) et/ou
**en ce que** l'unité de moulinet (2) est agencée de manière ajustable sur le support (20) et ce, par rotation ou pivotement autour d'un axe (SA) parallèlement ou presque parallèlement à l'axe de la bobine (4).

16. Unité de moulinet selon l'une quelconque des revendications 13 à 15, **caractérisée en ce que** le au moins un oeillet guide-fil (18) est agencé sur le coulisseau (11) en décalage radial par rapport à la coulisse (10) et **en ce que** la coulisse (10) peut être ajustée avec le coulisseau (11) par rotation ou pivotement autour de l'axe de la coulisse.

17. Support pour une unité de moulinet selon l'une quelconque des revendications 1 à 12 à utiliser sur une canne à pêche (1), **caractérisé en ce que** le support (20) peut être fixé sur la périphérie du boîtier de l'unité de moulinet (2) et **en ce que** l'unité de moulinet (2) peut être ajustée sur le support (20) et ce, par rotation ou pivotement autour d'un axe (SA) parallèlement ou presque parallèlement à l'axe de la bobine (4) de l'unité de moulinet.

18. Support selon la revendication 17, **caractérisé en ce qu'**il présente au moins deux mâchoires de serrage (27, 28) pour le blocage sur la périphérie du boîtier.
